# EUROPÄISCHE PATENTSCHRIFT

(11) **EP 1 082 205 B1**
(45) Veröffentlichungstag und Bekanntmachung des Hinweises auf die Patenterteilung: **05.03.2003**
(21) Anmeldenummer: 99948547.7
(22) Anmeldetag: 03.04.1999
(51) Int. Cl.: B29C 47/68

(54) **FILTEREINRICHTUNG FÜR STRANGPRESSEN UND SPRITZGIESSMASCHINEN**
FILTER DEVICE FOR EXTRUDERS AND INJECTION MOULDING MACHINES
DISPOSITIF DE FILTRATION POUR EXTRUDEUSES ET MACHINES A MOULER PAR INJECTION

(30) Priorität: 30.04.1998 DE 19819195; 30.07.1998 DE 19834302
(43) Veröffentlichungstag der Anmeldung: 14.03.2001
(60) Teilanmeldung: 02012772.6
(73) Patentinhaber: Kreyenborg Verwaltungen und Beteiligungen GmbH & Co. KG, 48157 Münster (DE)
(72) Erfinder: KREYENBORG, Jan-Udo, D-48145 Münster (DE); STUDE, Rolf-Rüdiger, D-48157 Münster (DE)
(74) Vertreter: Habbel, Hans-Georg, Dipl.-Ing.
(86) Internationale Anmeldenummer: DE9901073
(87) Internationale Veröffentlichungsnummer: WO99056939

(56) Entgegenhaltungen:
- EP-A- 0 250 695
- DE-A- 19 615 679
- DE-C- 19 730 574
- DE-U- 29 517 140

## Beschreibung

Die Erfindung bezieht sich auf eine Filtereinrichtung für Strangpressen und Spritzgießmaschinen gemäß dem Oberbegriff des Hauptanspruches.

Eine gattungsbildende Filtereinrichtung wird in der DE 42 18 756 C1 beschrieben.

Aus dem DE 295 17 140 U1 ist eine Filtereinrichtung bekanntgeworden, bei der ein ovales Sieb in den Siebbolzen eingesetzt wird. Bei dieser vorbekannten Ausführungsform handelt es sich um einen Siebwechsler, bei dem der Extruder bei Siebwechslern abgestellt werden muß, so daß die Dichtfänge zwischen Materialkanal und Gehäuseaußenkante kleiner sein darf als bei einem kontinuierlichen Siebwechsler.

Der Erfindung liegt die Aufgabe zugrunde, bei Filtereinrichtungen der gattungsgemäßen Art eine große Siebfläche zur Verfügung zu stellen, die aber in einem relativ kleinen Gehäuse angeordnet ist, so daß die Gesamtanlage nicht größer baut als die im Stand der Technik üblichen Filtereinrichtungen. Mit der großen Siebfläche soll eine lange Standzeit erzielt werden und weiterhin gute Filtrierergebnisse bei normalem Durchsatz im Vergleich zu im Stand der Technik üblichen normalen Sieben. Es wird also eine Durchsatzerhöhung im Vergleich zu normalen Sieben angestrebt.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, daß das Sieb in jedem Siebträgerbolzen nahezu der Größe, d. h. der Länge in Verschieberichtung des Siebträgerbolzens gesehen des eigentlichen, die Siebträgerbolzen aufnehmenden Gehäuses ausgebildet ist. Hierbei tritt die Schwierigkeit auf, daß beim Ausfahren des Siebes, d. h. des Filterelementes, dieses bereits mit der Atmosphäre in einem peripheren Bereich des Filterelementes in Verbindung kommt, so daß ein Ausströmen des gefilterten und zu filternden Kunststoffes eintritt. Es muß also dafür Sorge getragen werden, daß in dem Moment, wenn der Siebträgerbolzen seine Ausfahrbewegung beginnt, der dieser Sieböffnung zugeordnete Eintrittsteilkanal vom Eintrittshauptkanal abgeschlossen wird. Andererseits muß sichergestellt werden, daß beim Einfahren des Siebträgerbolzens in seine Filtrierstellung eine Vorentlüftung der Sieböffnung erfolgen kann, während der dem anderen Siebträgerbolzen zugeordnete Eintrittsteilkanal weiterhin mit zu filtrierendem Kunststoffmaterial beschickt wird. Durch diese, durch das Sperrmittel erreichbare Sperrsteltung wird die Möglichkeit der Ausbildung eines ovalen, großen Siebes ermöglicht.

Bei dem Einsatz eines großen ovalen Siebes wird gemäß der Erfindung vorgeschlagen, daß sich die Eintrittskanäle je Sieböffnung mindestens in zwei Anströmkanäle öffnen, wobei aber nur ein Abströmkanal je Sieböffnung vorgesehen sein kann. Somit werden günstige Anström- und Abströmverhältnisse geschaffen.

Das Sperrmittel ist vorzugsweise als Bolzen ausgebildet und der vorzugsweise in einem Vorsatzgehäuse angeordnete Bolzen weist eine Durchflußöffnung für den plastifizierten Kunststoffstrom auf, wobei die Durchflußöffnung dadurch gebildet wird, daß der Bolzen eine vorzugsweise umlaufende Einschnürung aufweist, die von dem Kunststoffstrom durchströmt werden kann. Diese Einschnürung mündet an der Mündung der beiden Eintrittsteilkanäle. Der Bolzen ist quer zum Kunststoffstrom verschiebbar und weist zusätzlich einen Abführhauptkanal und Abführteilkanäle auf, die an den Abführhauptkanal anschließen. Durch Verschieben des Bolzens kann nunmehr eine Stellung erreicht werden, in der der Eintrittshauptkanal über die im Bolzen vorgesehene Einschnürung mit einem Eintrittsteilkanal verbunden ist. Über die heute üblichen Steuerungen kann dieser, das Sperrmittel bildende Bolzen in eine solche Stellung verfahren werden, daß einerseits der zu der einen Sieböffnung führende Eintrittsteilkanal ganz abgeschlossen ist und andererseits die Möglichkeit besteht, trotz Beschicken des anderen Eintrittsteilkanales eine Verbindung zum anderen Eintrittsleitkanal zu schaffen, so daß hier ein Vorfluten der Sieböffnung ermöglicht wird.

Außerdem ermöglicht der gemäß den Unteransprüchen ausgebildete Bolzen, daß dann, wenn der Bolzen eine Stellung einnimmt, in der der Eintrittshauptkanal über die im Bolzen vorgesehene Einschnürung mit einem Eintrittsteilkanal verbunden ist, der andere Eintrittsteilkanal über einen Abführteilkanal mit dem Abführhauptkanal verbunden ist, so daß also das Beschicken des an die Filtereinrichtung anschließenden Werkzeuges weiterhin erfolgt, gleichzeitig aber das stillgesetzte Sieb von der Reinsiebseite zur Schmutzsiebseite hin durchströmt werden kann und die hier abgelösten Schmutzpartikelchen über den diesem Sieb zugeordneten Eintrittsteilkanal zurückgespült und sodann über einen Abführteilkanal in den Abführhauptkanal geführt werden. Der Abführhauptkanal mündet hiermit in die Atmosphäre.

Der als Sperrmittel ausgebildete Bolzen weist an seiner dem Eintrittshauptkanal zugewandten Seite einen Bypasskanal auf, der in Abhängigkeit der Stellung des Bolzens eine Verbindung zwischen dem Eintrittshauptkanal und der Außenatmosphäre herzustellen in der Lage ist.

Ein Ausführungsbeispiel der Erfindung wird nachfolgend anhand der Zeichnungen erläutert. Die Zeichnungen zeigen dabei in
- Fig. 1: eine Filtereinrichtung mit zwei Siebträgerbolzen und je einem in jedem Siebträgerbolzen angeordneten großen ovalen Sieb, in
- Fig. 2: die Sperrstellung des oberen Siebträgerbolzens und in
- Fig. 3: die Vorflutstellung für die Sieböffnung im oberen Siebbolzen, wobei in Fig. 2 und Fig. 3 die Eintrittsteilkanäle 8a und 8b im Schnitt um etwa 30° versetzt gezeichnet sind.

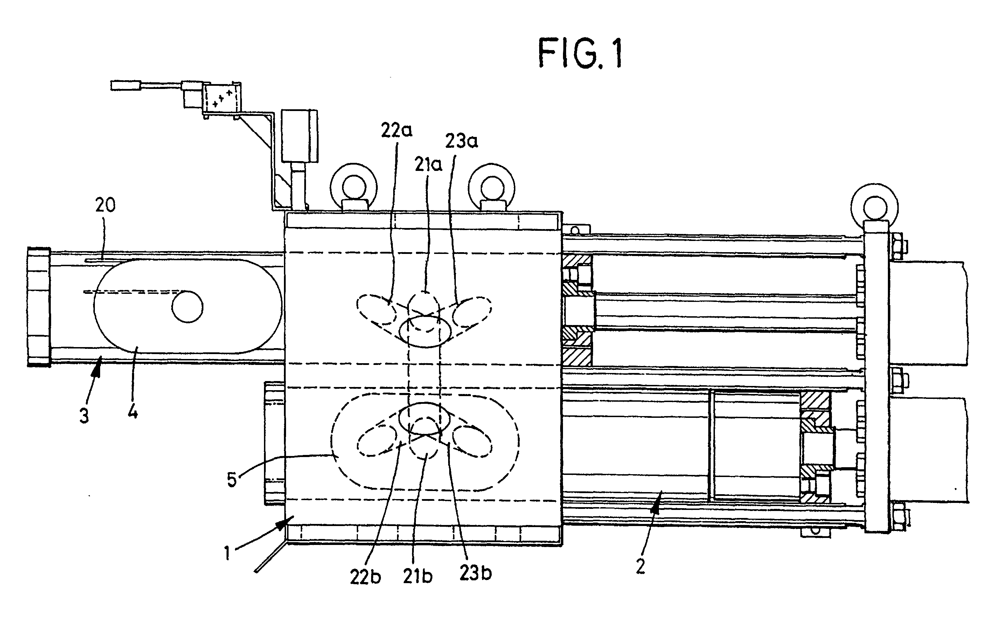

Gemäß Fig. 1 sind in einem Gehäuse 1 zwei Siebträgerbolzen 2 und 3 angeordnet, die bei dem dargestellten Ausführungsbeispiel übereinander angeordnet sind. In den Siebträgerbolzen 2 und 3 sind in Sieböffnungen 28 und 29 Fitterelemente 4 und 5 vorgesehen, die- wie aus der Zeichnung deutlich ersichtlich - oval ausgebildet sind, wobei sich die lange Achse des Ovals in Richtung der Verschieberichtung der Siebträgerbolzen 2 und 3 erstreckt und die Länge der ovalen Achse der Filterelemente 4, 5 gegenüber der Länge der Gehäusebohrung im Gehäuse 1 derart gewählt ist, daß nur die zur Abdichtung der Siebträgerbolzen 2, 3 in der Gehäusebohrung erforderliche Länge der Siebträgerbolzen 2, 3 filterelementfrei ist. An sich bekannte Lüftungsnuten 20 sind in den Siebträgerbolzen 2, 3 ausgearbeitet.

Aus der Darstellung gemäß Fig. 1 ist ersichtlich, daß kurz nach Beginn der Ausschiebebewegung des einen oder anderen Siebträgerbolzens 2 oder 3 die periphere Randseite der jeweiligen Filterelemente 4 oder 5 bereits mit der Außenatmosphäre in Verbindung kommt, während der übrige Teil der Filterelemente 4 oder 5 noch mit der Zuführung des zu filtrierenden oder gefilterten Kunststoffmaterials in Verbindung steht, so daß hier eine unmittelbare Verbindung zwischen der Zufuhr des Kunststoffmaterials oder der Abfuhr des Kunststoffmaterials mit der Außenatmosphäre erfolgen würde.

Die Verschiebung des Siebträgerbolzens 2, 3 erfolgt in an sich bekannter Weise über hydraulische oder elektrische Einrichtungen und wird über entsprechende Steuerungen - wie allgemein im Stand der Technik üblich - gesteuert.

Um diese schädliche Verbindung zwischen der Sieböffnung und der Außenatmosphäre zu verhindern, wird gemäß der Erfindung ein Sperrmittel 10 vorgesehen, das bei dem dargestellten Ausführungsbeispiel in Verbindung mit dem Gehäuse 1 wie folgt ausgebildet ist:

Das Gehäuse 1 weist einen Eintrittshauptkanal 6 und einen Austrittshauptkanal 7 auf, wobei vor dem Eintrittshauptkanal 6 eine in der Zeichnung nicht dargestellte Schnecke vorgesehen sein kann, durch welche das plastifizierte kunststoffmaterial dem Eintrittshauptkanal 6 unter entsprechend hohem Druck zugeführt wird. Innerhalb des Gehäuses 1 teilt sich der Eintrittshauptkanal 6 in zwei Eintrittsteilkanäle 8a und 8b, die mit

Sieböffnungen 28 bzw. 29 in Verbindung stehen, in denen die Filterelemente 4, 5 angeordnet sind. An die Reinsiebseite der Sieböffnungen 28, 29 schließen Austrittsteilkanäle 9a und 9b an, die zu einem Austrittshauptkanal 7 führen.

Vor dem eigentlichen Gehäuse 1 der Filtereinrichtung ist ein Zusatzgehäuse 24 vorgesehen, das einen als Sperrmittel ausgebildeten Bolzen 11 aufnimmt, der über hydraulische, pneumatische oder sonstige Mittel quer zur Strömungsrichtung des Kunststoffstromes verschiebbar ist. In diesem Gehäuse 24 münden Verlängerungen der Eintrittsteilkanäle 8a und 8b auf der einen Seite und gegenüberliegend auf der anderen Seite des Bolzens 11 mündet der Haupteintrittskanal 6. Anstelle eines Zusatzgehäuses kann das Sperrmittel auch in dem Gehäuse 1 angeordnet sein.

Die Fließverbindung zwischen dem Eintrittshauptkanal 6 und den Eintrittsteilkanälen 8a und 8b wird durch eine Einschnürung im Bolzen 11 erreicht, wobei bei dem dargestellten Ausführungsbeispiel der Bolzen 11 zylindrisch ausgebildet ist, d. h. im Querschnitt rund und die Einschnürung 12 über den ganzen Außenumfang des Bolzens 11 vorgesehen wird. Das durch das Gehäuse 24 und dem Bolzen 11 sowie den Eintrittshauptkanal 6 gebildete Gerät wird nachfolgend als Sperrmittel 10 bezeichnet, wobei der Bolzen 11 auch polygonal ausgebildet sein kann. Der Bolzen 11 weist weiterhin einen Abführhauptkanal 16 auf, der sich bei dem dargestellten Ausführungsbeispiel zentrisch in Längsachse des Bolzens 11 gesehen erstreckt und einenendes zur Atmosphäre hin frei mündet. Zwei Abführteilkanäle 14 und 15 erstrecken sich quer zur Längsachse des Abführhauptkanales 16 und münden einenendes in den Abführhauptkanal 16 und anderenendes an der Außenseite des Bolzens 11. Natürlich können auch andere Ausgestaltungen des oder der Abführhauptkanäle vorgesehen sein.

Zusätzlich ist der Bolzen 11 mit einem Bypasskanal 27 ausgerüstet, der so angeordnet ist, daß er in Fließverbindung mit dem Eintrittshauptkanal 6 bringbar ist, so daß das aus dem Eintrittshauptkanal 6 kommende Material nicht zu den Eintrittsteilkanälen 8a oder 8b geführt wird, sondern zur Atmosphäre hin abgeführt werden kann. Beim Start des Extruders wird verunreinigte und vererackte Schmelze ungefiltert durch den Bypasskanal 27 nach außen abgelassen und erst bei diesem Prozeß wird die Produktion gestartet.

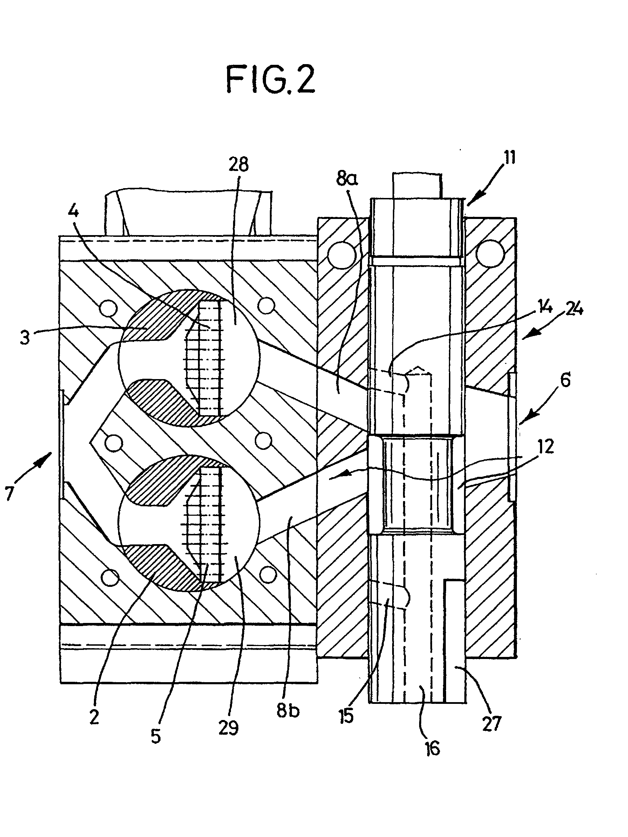

Bei der Darstellung gemäß Fig. 2 befindet sich der Bolzen in einer solchen Stellung, daß die Einschnürung 12 den Strom des durch den Eintrittshauptkanal 6 zugeführten Kunststoffmateriales zum Eintrittsteilkanal 8b führt. Von hier aus gelangt das Material zum Filterelement 5.

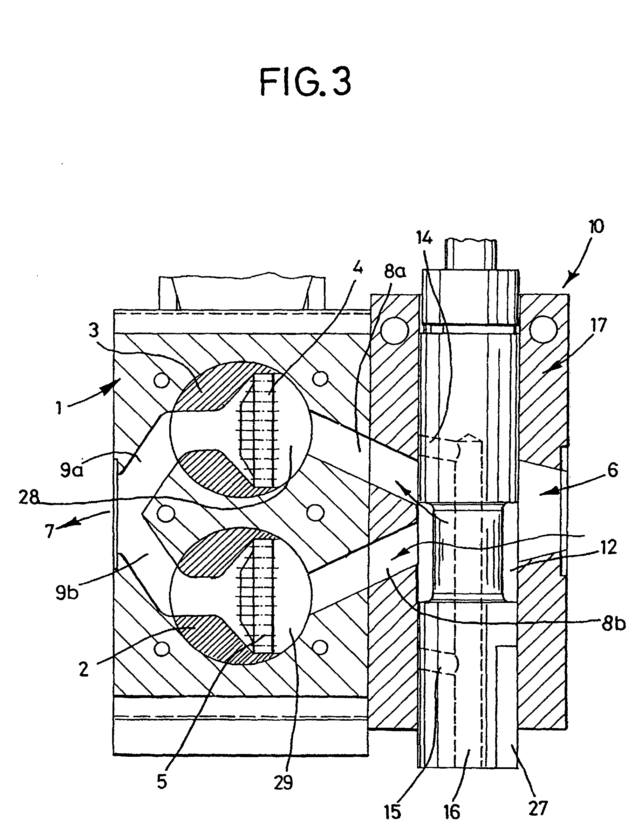

Fig. 3 zeigt, daß durch eine geringfügige Verschiebung des Bolzens 11 die Einschnürung 12 auch mit dem Eintrittsteilkanal 8a in Verbindung kommen kann, so daß ein Vorfluten der Sieböffnung 28 durchgeführt werden kann.

Fig. 1 zeigt weiterhin, daß jeder Eintrittsteilkanal sich zu der ihm zugeordneten Sieböffnung in zwei Anströmkanälen 22a, 23a bzw. 22b und 23b öffnet, so daß sehr günstige Anströmverhältnisse für die großen ovalen Filterelemente 4 bzw. 5 erreicht werden. Die Fig. 1 soll auch verdeutlichen, daß je Sieböffnung 28, 29 nur ein Abströmkanal 21a bzw. 21b vorgesehen ist.

Mit dem erfindungsgemäß ausgebildeten Filterelement 4 oder 5 wird eine lange Standzeit bei großer Siebfläche erreicht sowie gute Filtrierergebnisse bei normalem Durchsatz im Vergleich zu einem normalen Sieb. Es ist auch eine Durchsatzerhöhung im Vergleich zu normalen Sieben möglich. Durch den Einsatz des vorbeschriebenen Sperrmittels 10 wird außerdem erreicht, daß dieses Sperrmittel auch bei anders ausgebildeten Extruderanordnungen in einfachster Weise als Anfahrventil und zum Rückspülen eingesetzt werden kann, so daß mit einem solchen Sperrmittel die unterschiedlichsten Aufgaben bei Filtereinrichtungen für Strangpressen und Spritzgießmaschinen erreichbar sind.

## Patentansprüche

1. Filtereinrichtung für Strangpressen und Spritzgießmaschinen zur Verarbeitung von thermoplastischen Kunststoffen, mit in mindestens zwei getrennten Kanälen eines Gehäuses (1) zwischen mindestens einem Eintrittshauptkanal (6) und mindestens einem Austrittshauptkanal (7) auswechselbar in Siebträgerbolzen (2, 3) in Sieböffnungen (28, 29) angeordneten Filterelementen (4, 5), die mit den in der jeweiligen Gehäusebohrung angeordneten Siebträgerbolzen (2, 3) ein- und ausfahrbar sind, wobei im Bereich des Eintrittshauptkanales (6) vor den Siebträgerbolzen (2, 3) mindestens ein Sperrmittel (10) angeordnet ist, das in der Durchflußstellung den Kunststoffstrom vom Eintrittshauptkanal (6) zu den Filterelementen nicht behindert, aber in einer Sperrstellung den Durchfluß des Kunststoffes in einem Eintrittsteilkanal (8a oder 8b) vom Eintrittshauptkanal (6) trennt, **dadurch gekennzeichnet, daß**
a) die Filterelemente (4, 5) in den Siebträgerbolzen (2, 3) in an sich bekannter Weise oval ausgebildet sind, wobei sich die lange Achse des Ovals in Richtung der Verschieberichtung des Siebträgerbolzens (2, 3) erstreckt und die Länge der ovalen Achse der Filterelemente (4, 5) gegenüber der Länge der Gehäusebohrung im Gehäuse (1) derart gewählt ist, daß nur die zur Abdichtung der Siebträgerbolzen (2, 3) in der Gehäusebohrung erforderliche Länge der Siebträgerbolzen (2, 3) filterelementfrei ist,
b) sich die Eintrittsteilkanäle (8a, 8b) je Sieböffnung (28, 29) mindestens in zwei Anströmkanäle (22a, 23a und 22b, 23b) öffnen.

2. Filtereinrichtung nach Anspruch 1, **gekennzeichnet durch** in den Siebträgerbolzen (2, 3) ausgebildete, mit den die Filterelemente (4, 5) aufnehmenden Sieböffnungen (28, 29) in Verbindung stehende Lüftungsnuten (20).

3. Filtereinrichtung nach Anspruch 1 oder 2, **dadurch gekennzeichnet, daß** mindestens ein Abströmkanal (21a bzw. 21b) je Sieböffnung (28, 29) vorgesehen ist.

4. Filtereinrichtung nach einem der vorhergehenden Ansprüche, **dadurch gekennzeichnet, daß** das Sperrmittel (10) durch einen den Eintrittshauptkanal (6) durchquerenden, quer zur Strömungsrichtung des zu filtrierenden Kunststoffstromes verstellbaren Bolzen (11) gebildet ist und der Strömungsweg vom Eintrittshauptkanal (6) zu den Eintrittsteilkanälen (8a und 8b) durch eine Einschnürung (12) im Außenumfang des Bolzens gebildet wird.

5. Filtereinrichtung nach Anspruch 4, **gekennzeichnet durch** einen Abführhauptkanal (16) im Bolzen (11), der einenendes zur Atmosphäre mündet und an den zwei Abführteilkanäle (14, 15) anschließen, die bei Verschieben des Bolzens (11) mit dem einen oder anderen Eintrittsteilkanal (8a, 8b) in Fließverbindung bringbar sind.

6. Filtereinrichtung nach einem der vorhergehenden Ansprüche, **dadurch gekennzeichnet, daß** bei Fließverbindung des Abführteilkanales (14, 15) mit den zugeordneten Eintrittsteilkanälen (8a, 8b) der Fließquerschnitt im Übergangsbereich zwischen den Eintrittsteilkanälen (8a, 8b) und den Abführteilkanälen (14, 15) kleiner ist als der Fließquerschnitt der Eintrittsteilkanäle (8a, 8b).

7. Filtereinrichtung nach einem der vorhergehenden Ansprüche, **dadurch gekennzeichnet, daß** das Sperrmittel (10) im Gehäuse (1) des Siebwechslers angeordnet ist.

8. Filtereinrichtung nach einem der vorhergehenden Ansprüche 1 bis 7, **dadurch gekennzeichnet, daß** das Sperrmittel (10) in einem eigenen Gehäuse (17) angeordnet ist, das an das Gehäuse (1) der Filtereinrichtung anschließbar ist.

9. Filtereinrichtung nach Anspruch 4, **dadurch gekennzeichnet, daß** der Bolzen (11) im Schnitt rund ausgebildet ist und die Einschnürung (12) über den ganzen Umfang des Bolzens (11) vorgesehen ist.

10. Filtereinrichtung nach Anspruch 4, **dadurch gekennzeichnet, daß** der Bolzen (11) an seiner dem Eintrittshauptkanal (6) zugewandten Seife einen Bypasskanal (27) ausweist, der in Abhängigkeit der Stellung des Bolzens (11) eine Verbindung zwischen dem Eintrittshauptkanal (6) und der Außenatmosphäre herzustellen in der Lage ist.

11. Filtereinrichtung nach Anspruch 10, **dadurch gekennzeichnet, daß** die Mündung des Bypasskanales (27) in den Eintrittshauptkanal (6) derart angeordnet ist, daß der Eintrittshauptkanal (6) sowohl mit der Einschnürung (12) als auch mit dem Bypass (27) in Fließverbindung bringbar ist, aber durch Verstellen des Bolzens (11) die Verbindung zwischen Eintrittshauptkanal (6) und der Einschnürung (12) abschließbar ist, während die Verbindung zwischen dem Eintrittshauptkanal (6) und dem Bypasskanal (27) geöffnet ist.

12. Filtereinrichtung nach Anspruch 4, **dadurch gekennzeichnet, daß** der Bolzen (11) des Sperrmittels (10) zusätzlich zu seiner Bewegung in Längsachse auch um die Längsachse drehbar ist.

## Claims

1. Filter device for extruders and injection moulding machines for processing thermoplastic materials with exchangeable filter elements (4, 5) in sieve-carrier pins (2, 3) in sieve ports (28, 29) located in at least two separate channels of a housing (1) between at least one main inlet channel (6) and at least one main outlet channel (7), which can be moved inwards and outwards with the sieve-carrier pins (2, 3) located in each housing bore, where at least one shut-off means (10) is located in the area of the main inlet channel (6) before the sieve-carrier pins (2, 3), which, in the flow-through position, does not obstruct the flow of plastic material from the main inlet channel (6) to the filter elements, but which, in a shut-off position, cuts off the flow of plastic material in an inlet channel (8a or 8b) from the main inlet channel (6), **characterised in that**,
a) the filter elements (4, 5) in the sieve-carrier pins (2, 3) are oval in shape in the manner known in the art, where the long axis of the oval extends in the direction of the direction of movement of the sieve-carrier pin (2, 3), and the length of the oval axis of the filter elements (4, 5) in relation to the length of the housing bore (1) is selected in such a way that only the length of the sieve-carrier pin (2, 3) necessary for sealing the sieve-carrier pin (2, 3) in the housing bore, is free of filter element,
b) the inlet-channel divisions (8a, 8b) open into at least two inflow channels (22a, 23a, and 22b, 23b) per sieve port (28, 29).

2. Filter device according to claim 1, **characterised by** ventilation grooves (20) formed in the sieve-carrier pins (2, 3) which are connected with the sieve ports (28, 29) which receive the filter elements (4, 5).

3. Filter device according to claim 1 or claim 2, **characterised in that** at least one outflow channel (21 a and 21 b) is provided for each sieve port (28, 29).

4. Filter device according to one of the preceding claims, **characterised in that** the shut-off means (10) is formed by an adjustable pin (11) which crosses through the main inlet channel (6) perpendicularly to the direction of flow of the plastic material being filtered and the flow path from the main inlet channel (6) to the inlet-channel divisions (8a and 8b) is formed by a constriction (12) in the outer circumference of the pin.

5. Filter device according to claim 4, **characterised by** a main drain-off channel (16) in the pin (11) which exits to the atmosphere at one end and to which drain-off channel divisions (14, 15) are connected which, when the pin (11) is moved, can be brought into connection with one or other of the inlet-channel divisions (8a, 8b) to permit flow of material.

6. Filter device according to one of the preceding claims, **characterised in that**, when a connection exists between the drain-off channel divisions (14, 15) and the appropriate inlet-channel divisions (8a, 8b) to permit flow of material, the cross-section of the flow in the transition area between the inlet-channel divisions (8a, 8b) and the drain-off channel divisions (14, 15) is smaller than the cross section of the inlet-channel divisions (8a, 8b).

7. Filter device according to one of the preceding claims, **characterised in that** the shut-off means (10) is located in the housing (1) of the sieve changer.

8. Filter device according to one of the preceding claims, **characterised in that** the shut-off means (10) is located in a housing (17) which can be connected to the housing (1) of the filter device.

9. Filter device according claim 4, **characterised in that** the cross-section of the pin (11) is round and the constriction (12) is provided around the entire circumference of the pin (11).

10. Filter device according claim 4, **characterised in that** the pin (11) has a bypass channel (27) on the side facing the main inlet channel (6), which, depending on the position of the pin (11), is able to form a connection between the main inlet channel (6) and the atmosphere.

11. Filter device according claim 10, **characterised in that** the opening of the bypass channel (27) is positioned in the main inlet channel (6) in such a way that the main inlet channel (6) can be made to connect both with the constriction (12) and the bypass (27) to permit flow of material, and, through adjustment of the pin (11) the connection between the main inlet channel (6) and the constriction (12) can be closed off while the connection between the main inlet channel (6) and the bypass channel (27) is open.

12. Filter device according claim 4, **characterised in that** the pin (11) of the shut-off means (10), in addition to its movement on the lengthwise axis, can also rotate around the lengthwise axis.

## Revendications

1. Dispositif de filtration pour extrudeuses et machines à mouler par injection, destiné à la transformation des matières plastiques thermoplastiques, équipé d'éléments filtrants (4, 5) disposés de façon interchangeable, dans des orifices de criblage (28, 29) dans des goujons supports (2, 3), dans au moins deux conduits séparés d'un carter (1) entre au moins un conduit d'entrée principal (6) et au moins un conduit de sortie principal (7), lesquels éléments filtrants pouvant rentrer et sortir grâce aux goujons supports (2, 3) de crible situés dans leur alésage respectif ménagé dans le carter, sachant que dans la zone du conduit d'entrée principal (6) en amont des goujons supports (2, 3) de crible figure au moins un moyen de fermeture (10) n'empêchant pas, lorsqu'en position d'écoulement, la circulation du flux de plastique du conduit d'entrée principal (6) vers les éléments filtrants, mais coupant, lorsqu'en position fermée, la circulation du plastique dans un conduit d'entrée partiel (8a ou 8b) afférent au conduit d'entrée principal (6), **caractérisé en ce que**
a) Les éléments filtrants (4, 5) dans les goujons supports (2, 3) de crible présentent une configuration ovale connue en soi, sachant que l'axe long de la forme ovale s'étend dans le sens de déplacement du goujon support (2, 3) de crible, et que la longueur de l'axe ovale des éléments filtrants (4, 5) a été choisie de telle sorte, par rapport à la longueur de l'alésage dans le carter (1), que seule la longueur nécessaire aux goujons supports (2 ,3) de crible pour étancher ces derniers (2, 3) est dénuée d'éléments filtrants.
b) Les canaux d'entrée partiels (8a, 8b) s'ouvrent, par orifice de crible (28, 29), au moins sur deux canaux d'afflux (22a, 23a et 22b, 23b).

2. Dispositif de filtration selon la revendication 1, **caractérisé par** des gorges d'aération (20) se trouvant en liaison avec les orifices de crible (28, 29) recevant les éléments filtrants (4,5), et qui sont configurées dans les goujons supports (2, 3) de crible.

3. Dispositif de filtration selon la revendication 1 ou 2, **caractérisé en ce qu'**au moins un conduit d'écoulement (21a et/ou 21b) est prévu par orifice de crible (28, 29).

4. Dispositif de filtration selon l'une des revendications précédentes, **caractérisé en ce que** le moyen de fermeture (10) est formé par un goujon (11) réglable traversant le conduit d'entrée principal (6), ceci transversalement au sens d'écoulement du flux de matière plastique à filtrer, et **en ce que** l'itinéraire d'écoulement du conduit d'entrée principal (6) vers les conduits d'entrée partiels (8a et 8b) est formé par un rétrécissement (12) de la circonférence extérieure du goujon.

5. Dispositif de filtration selon la revendication 4, **caractérisé par** un conduit d'évacuation principal (16) dans le goujon (11), lequel conduit débouche à une extrémité dans l'atmosphère et auquel viennent se raccorder deux canaux d'évacuation partiels (14, 15) lesquels, en déplaçant le goujon (11), peuvent être mis en liaison d'écoulement avec l'un ou l'autre conduit d'entrée partiel (8a, 8b).

6. Dispositif de filtration selon l'une des revendications précédentes, **caractérisé en ce que**, lorsque le conduit d'évacuation partiel (14, 15) se trouve en liaison d'écoulement avec les conduits partiels d'entrée (8a, 8b) afférents, la section de passage dans la zone de transition entre les conduits d'entrée partiels (8a, 8b) et les conduits d'évacuation partiels (14, 15) est inférieure à la section de passage des conduits d'entrée partiels (8a, 8b).

7. Dispositif de filtration selon l'une des revendications précédentes, **caractérisé en ce que** le moyen de fermeture (10) est disposé dans le carter (1) de l'échangeur de crible.

8. Dispositif de filtration selon l'une des revendications précédentes 1 à 7, **caractérisé en ce que** le moyen de fermeture (10) est disposé dans son propre carter (17), lequel est raccordable au carter (1) du dispositif de filtration.

9. Dispositif de filtration selon la revendication 4, **caractérisé en ce que** le goujon (11) est de section ronde et **en ce que** le rétrécissement (12) est prévu sur toute la circonférence du goujon (11).

10. Dispositif de filtration selon la revendication 4, **caractérisé en ce que** le goujon (11) présente un conduit de bypass (27) sur son côté tourné vers le conduit d'entrée principal (6), lequel conduit de bypass est en mesure d'établir, en fonction de la position du goujon (11), une liaison entre le conduit d'entrée principal (6) et l'atmosphère extérieure.

11. Dispositif de filtration selon la revendication 10, **caractérisé en ce que** l'embouchure du conduit de bypass (27) dans le conduit d'entrée principal (6) est agencée de telle sorte que le conduit d'entrée principal (6) puisse être amené en liaison d'écoulement aussi bien avec le rétrécissement (12) qu'avec le bypass (27), mais **en ce que**, en déplaçant le goujon (11), la liaison entre le conduit d'entrée principal (6) et le rétrécissement (12) est obturable, pendant que la liaison entre le conduit d'entrée principal (6) et le conduit de bypass (27) est ouverte.

12. Dispositif de filtration selon la revendication 4, **caractérisé en ce que** le goujon (11) du moyen de fermeture (10) peut, outre son mouvement le long de son axe longitudinal, aussi tourner autour de son axe longitudinal.
